(19) Europäisches Patentamt
European Patent Office
Office européen des brevets

(11) **EP 2 266 314 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(21) Anmeldenummer: **09732856.1**

(22) Anmeldetag: **09.04.2009**

(51) Int Cl.:
*G06T 7/60* (2006.01)    *G06T 7/00* (2006.01)
*H04N 13/02* (2006.01)    *H04N 13/00* (2006.01)
*H04N 7/18* (2006.01)    *B64F 1/00* (2006.01)
*G08G 5/04* (2006.01)

(86) Internationale Anmeldenummer:
**PCT/EP2009/002644**

(87) Internationale Veröffentlichungsnummer:
**WO 2009/127362 (22.10.2009 Gazette 2009/43)**

(54) **ÜBERWACHUNGSVERFAHREN UND -VORRICHTUNG FÜR FLUGKORRIDORE ODER TEILE VON FLUGKORRIDOREN VON FLUGHÄFEN**

MONITORING METHOD AND APPARATUS FOR FLIGHT CORRIDORS OR PARTS OF FLIGHT CORRIDORS OF AIRPORTS

PROCÉDÉ ET DISPOSITIF DE SURVEILLANCE POUR DES COULOIRS AÉRIENS OU DES PARTIES DE COULOIRS AÉRIENS D'AÉROPORTS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **14.04.2008 DE 102008018880**

(43) Veröffentlichungstag der Anmeldung:
**29.12.2010 Patentblatt 2010/52**

(73) Patentinhaber: **Carl Zeiss Optronics GmbH**
**73447 Oberkochen (DE)**

(72) Erfinder:
• **VOGEL, H**
**73432 Aalen (DE)**
• **BAADER, Paul**
**68159 Mannheim (DE)**

(74) Vertreter: **Schmid, Wolfgang**
**Lorenz & Kollegen**
**Patentanwälte Partnerschaftsgesellschaft**
**Alte Ulmer Strasse 2**
**89522 Heidenheim (DE)**

(56) Entgegenhaltungen:
**WO-A-2004/008403**

• **RAOUL TOMMASI CRUDELI: "THE VECTORIAL 3D BIRD FLIGHT MONITORING SYSTEM: A NEW TOOL TO TRACK AND MANAGE BIRDS ON AIRPORTS" INTERNET ARTICLE, [Online] April 2007 (2007-04), Seiten 1-8, XP002536735 Gefunden im Internet: URL:http://www.airporttech.tc.faa.gov/NAPT F/att07/2007/Papers/P07074%20Tommasi%20Cr u deli.pdf> [gefunden am 2009-07-10]**
• **R. SNOWDEN ET AL.: BIRD STRIKE COMMITTEE PROCEEDINGS, 2007 BIRD STRIKE COMMITTEE - USA/CANADA, 9TH ANNUAL MEETING, [Online] September 2007 (2007-09), Seiten 1-23, XP002536736 Kingston, Ontario Gefunden im Internet: URL:http://digitalcommons.unl.edu/cgi/ view content.cgi? article=1007&context=birdstrik e2007> [gefunden am 2009-07-10]**
• **JAMES R. IVEY: "Thermal Imagery Applied to reducing Bird Hazards to Aircraft at Airports" BIRD STRIKE COMMITTE PROCEEDINGS, 1999 BIRD STRIKE COMMITTEE - USA/CANADA, FIRST JOINT ANNUAL MEETING, [Online] 1999, Seiten 1-2, XP002536737 Vancouver, BC Gefunden im Internet: URL:http:// digitalcommons.unl.edu/cgi/view content.cgi? article=1017&context=birdstrik e1999> [gefunden am 2009-07-10]**

**Beschreibung**

Die Erfindung betrifft ein Überwachungsverfahren und eine Überwachungsvorrichtung für Flugkorridore oder Teile von Flugkorridoren von Flughäfen, mit welchem wenigstens ein sich nähernder oder vorhandener Vogel oder Vogelschwarm stereoskopisch erfasst wird.

Bei Start und Landung von Flugzeugen kommt es häufig zu Kollisionen mit Vögeln oder Vogelschwärmen. Vogelschwärme bezeichnen dabei Aggregationen von Vögeln meist gleicher Größe und Art, welche oft in dieselbe Richtung fliegen. Insbesondere beim Kreuzen von Flugkorridoren von Flughäfen mit Vogelflugrouten des regionalen oder überregionalen Vogelzugs, welche sich häufig an Landschaftsstrukturen wie Gewässern, Tälern oder Küstenlinien orientieren, ist diese Gefahr stark erhöht. Bei derartigen Kollisionen kann es zu Schäden u. a. an den Triebwerken von Flugzeugen kommen. Weltweit werden jährlich in der Luftfahrt über 5000 Fälle von sogenanntem Vogelschlag, d. h. einem Zusammenprall von Vögeln mit Objekten, mit einer Gesamtschadenssumme von mehreren 100 Millionen US$ gemeldet. Neben der hohen Gefahr für die Luftfahrt ist auch dieser wirtschaftliche Schaden sehr hoch.

Die DE 10 2005 055 879 A1 betrifft eine Flugverkehr-Leiteinrichtung zur Kontrolle und Steuerung des Flugverkehrs im Flughafenbereich mit einer Mehrzahl von auf zugeordnete Bereiche des Flughafens ausrichtbaren Beobachtungskameras, mit einer Videoprojektionseinrichtung in einer Leitzentrale zur Darstellung von mit den Beobachtungskameras erfassten Informationen als Videopanorama.

In der DE 100 32 433 A1 ist ein Verfahren zur Raumüberwachung, insbesondere des Bodenraums auf Flughäfen beschrieben.

Des weiteren ist in der DE 102 31 299 A1 ein Kollisionswarnsystem für Windenergieanlagen offenbart.

Zum weiteren Stand der Technik wird auf die Dokumente XP2536735 ("The Vectorial 3D Bird Flight Monitoring System: A new Tool to track and manage Birds on Airports", Raoul Tommasi Crudeli, April 2007, presented for the 2007 FAA Worldwide Airport Technology Transfer Conference, Atlantic City, New Jersey, USA), WO2004/008403 A2, XP2536736 ("Airport Bird Hazard Risk Assessment Process", 2007, Richard Snowden et al., 2007 Bird Strike Committee Proceedings, 9th Annual Meeting, Kingston, Ontario), US2006/0049930 A1 und EP1484628 A1 verwiesen.

Der Erfindung liegt daher die Aufgabe zugrunde, ein Überwachungsverfahren und eine Überwachungsvorrichtung der eingangs erwähnten Art zu schaffen, welche eine zuverlässige und frühzeitige Vorwarnung vor Kollisionen mit Vögeln bzw. Vogelschwärmen, insbesondere bei Start und Landung von Flugzeugen, generieren, um der Flugsicherung auch zu ermöglichen, gegebenenfalls die Piloten vorab zu informieren und/oder Starts bzw. Landungen so zu verändern z.B. zu verschieben, dass eine Kollision zumindest weitgehend verhindert werden kann.

Diese Aufgabe wird erfindungsgemäß durch ein Überwachungsverfahren gemäß Anspruch 1 gelöst. Hinsichtlich der Überwachungsvorrichtung wird die Aufgabe durch Anspruch 9 gelöst.

Durch die erfindungsgemäßen Maßnahmen ist es in vorteilhafter Weise möglich, eine zuverlässige und frühzeitige Vorwarnung vor Vogelschlag, insbesondere mit einer Vorwarnzeit von etwa 2,5 bis etwa 10 Minuten zu erzeugen. Diese ermöglicht der Flugsicherung (DFS) oder Flugsicherungssystemen, die Piloten vorab zu informieren und/oder Starts und/oder Landungen von Flugzeugen gegebenenfalls so zu verändern, d.h. verschieben oder verzögern, dass eine Kollision mit einem Vogel oder einem Vogelschwarm wirksam verhindert wird. Vorteilhaft ist auch, dass es sich um ein passives System handelt, welches selbst keine Strahlung aussendet, da der Betrieb in Flughafennähe erfolgt. Aktive Systeme wie Radar oder Laser, welche aktiv Strahlung aussenden, könnten zu Störungen anderer Überwachungssysteme führen oder sind mitunter nicht zulässig. Radarsysteme sind insbesondere aufgrund ihrer niedrigen vertikalen Auflösung nachteilig. Radarsysteme werden üblicherweise am Boden angeordnet und müssten dann auf die Vogelflugroute oder deren Kreuzungsbereich mit dem Flugkorridor oder dessen Teilen in beispielsweise über 90 m Höhe gerichtet werden, was lediglich zu schlechten Messergebnissen führen wür-de. Auch große Windkraftanlagen und Gebäude mit transparenten Teilen haben häufig Konflikte mit Vögeln, so dass das erfindungsgemäße Überwachungsverfahren und die erfindungsgemäße Überwachungsvorrichtung auch hier Anwendung finden könnten.

Erfindungsgemäß werden wenigstens einzelne Parameter des wenigstens einen Vogels oder des wenigstens einen Vogelschwarms aus der Gruppe Flughöhe, Flugrichtung, Fluggeschwindigkeit, Art, Größe oder Gewicht des wenigstens einen Vogels, Ausdehnung des wenigstens einen Vogelschwarms, Anzahl und Flugabstand der Vögel des wenigstens einen Vogelschwarms ermittelt. Die Ausdehnung des wenigstens einen Vogelschwarms kann dabei insbesondere die Länge, die Breite, die Höhe und/oder die Diagonale umfassen. Des Weiteren kann noch die Masse der erfassten Vögel bestimmt werden. Eine Vorhersage über einen Ankunftszeitpunkt und eine Flughöhe eines erfassten wenigstens einen Vogels oder eines erfassten wenigstens einen Vogelschwarms an einem Kreuzungsbereich mit dem Flugkorridor oder Teilen des Flugkorridors wird mittels der einzelnen Parameter unter Berücksichtigung ornithologischer Studien oder Daten, welche, insbesondere eine im wesentlichen konstante Fluggeschwindigkeit und Flugrichtung in bestimmten Flughöhen der Vögel zeigen, biologischer Faktoren und zusätzlicher ortsspezifischer Parameter, bestimmt, anhand der eine Bewertung durchgeführt und gegebenenfalls eine entsprechende Warnmeldung zur Einleitung von Gegenmaßnahmen, Minderungs- oder Vermeidungsmaßnahmen von Vogelschlag an ein übergeordnetes System, insbesondere Flugsicherungssystem und/oder an wenigstens ein startendes oder landendes Flugzeug ausgegeben wird. Bei der Bewertung werden biologische Faktoren bzw. ornithologische Studien und/oder ortsspezifische Parameter, wie Tageszeit, Jahreszeit, Temperatur, Windrichtung, Windstärke, Luftdruck, Flächennutzung in der Umgebung, Topographie oder dergleichen berücksichtigt. Das Verfahren greift sozusagen auf eine ornithologische Ballistikdatenbank zu. Es werden stereoskopische Aufnahmen verwendet. Dies geschieht mittels mindestens zwei Kameras pro Standort und/oder Stereokameraeinrichtung, die zueinander in definiertem Abstand montiert sind. Während der Aufnahme laufen die Kameras synchron. Dadurch wird garantiert, dass die Aufnahmezeitpunkte beider Kameras identisch sind. Die Stereokameraeinrichtungen sind im Bereich der Flugkorridore der Flugzeuge derart angeordnet, dass sich Flugkorridoren nähernde Vögel erfasst werden. Dabei können die Vögel oder Vogelschwärme noch eine Entfernung von beispielsweise 2,5 km bis 4 km von den potentiellen Kollisionsbereichen aufweisen.

Übliche Vogelflughöhen liegen bei größer 75 m über Grund, insbesondere zwischen etwa 50 m und 100 m. Es wurden jedoch auch Flughöhen von bis zu 300 m beobachtet. Durch die Bestimmung der Flughöhe werden die für potentielle Vogelschläge verantwortlichen Vögel erfasst und unnötige Warnungen aufgrund zu niedrig oder zu hoch fliegender Vögel vermieden. Dementsprechend kann die wenigstens eine Stereokameraeinrichtung auf Bereiche bzw. Richtungen, insbesondere bekannte Vogelflugrouten, ausgerichtet werden, aus denen Vögel bzw. Vogelschwärme erwartet werden. Darüber hinaus kann die wenigstens eine Stereokameraeinrichtung entlang einer bekannten Vogelflugroute angeordnet sein, um präzise Vorhersagen über den Ankunftszeitpunkt eines erfassten wenigstens einen Vogels oder eines erfassten wenigstens einen Vogelschwarms ermitteln zu können. Das erfindungsgemäße Überwachungssystem ermöglicht sowohl eine Vorwarnung vor möglichen Kollisionen mit ziehenden Schwärmen als auch eine Warnung vor sonstigem Vogelflug im Flugkorridor. Darauf basierend können Minderungs- oder Vermeidungsmaßnahmen gegen Vogelschlag getroffen werden, zum Beispiel durch nachgeahmte Warnrufe von Raubvögeln oder dergleichen. Auch kann anhand der Warnung oder Alarmierung die Einreihung der Flugzeuge im An- und Abflug zeitlich reorganisiert werden, d. h. wenn der Durchzug eines Vogelschwarmes vorhergesagt wurde, dann wird z. B. die Landung eines Flugzeugs um einige Minuten nach hinten verschoben. Bei Windkraftanlagen oder empfindlichen Gebäuden können mit dem System vernetzte Warneinrichtungen helfen, Vogelschlag und damit Schäden für Gebäude und Vogelpopulationen zu vermeiden. Die Vögel können demnach ebenfalls durch entsprechende Maßnahmen gewarnt und somit geschützt werden. Mit dem erfindungsgemäßen Verfahren können Dritte z. B. die Flugsicherung und/oder Flugzeuge bereits vorab, z. B. 5 bis 8 Minuten vorher, mindestens 2 bis 2,5 Minuten vorher vor einem potentiellen Vogelschlag gewarnt werden. Auch eine kurzfristige Unterrichtung des Piloten eines betroffenen Flugzeugs, insbesondere kurz vor einem möglichen Vogelschlag kann hilfreich sein.

Ein Ankunftszeitpunkt der erfassten Vögel oder der erfassten Vogelschwärme an einem Kreuzungsbereich mit dem Flugkorridor wird bestimmt. Eine derartige Prognose ist insbesondere aufgrund der relativ konstanten Geschwindigkeit und Flughöhe der Vögel, z. B. etwa 100 m, möglich. Laut ornithologischer Studien fliegen Zugvögel in der Regel in konstanter Höhe und mit konstanter Geschwindigkeit. Auch fliegen bestimmte Vogelarten auf bestimmten Vogelflugrouten, so dass für eine bestimmte Anlage, z. B. einem Flughafen, vorab die Wahrscheinlichkeiten bestimmbar sind, welche Vogelart zu welchen Tages- und Jahreszeiten fliegt. Derartige Bestimmungen können in der Überwachungsvorrichtung vorab, z. B. als Tabelle hinterlegt sein, um die Bestimmung der aktuell aufzunehmenden Vögel zu erleichtern und die Gefahrenbewertung zu verbessern. Es kann sich somit um eine Art lernendes System handeln, wodurch die Vorhersage weiter verbessert werden kann. Aus diesem Grund kann eine verlässliche Vorhersage für das Eintreffen im Anflugkorridor und die dortige Flughöhe erstellt werden. Anhand des Flugwegs und der ermittelten Vogelfluggeschwindigkeit wird der Ankunftszeitpunkt des Schwarms am Kreuzungspunkt der Flugroute ermittelt. Durch das konstante Verhalten der Vögel in diesem Fall kann somit eine Vorwarnzeit im Minutenbereich beispielsweise 2 bis 8 Minuten erreicht werden. Mittels dieser Daten können startende bzw. landende Flugzeuge frühzeitig informiert und gegebenenfalls so gesteuert werden, dass ein Zusammenstoß verhindert werden kann.

Bei der Bewertung kann ein Gefährdungspotential bzw. eine Flugsicherheitsrelevanz bestimmt werden. Dieses Gefährdungspotential kann in mehrere unterschiedliche, beispielsweise 2 bis 5 Klassen eingeteilt sein, anhand derer die entsprechend auszugebende Warnmeldung bestimmt wird. Beispielsweise könnte die Warnmeldung als eine Art Ampelschaltung realisiert sein, wobei die Anzeige der Farbe rot kritisch, der Farbe gelb eine gewisse Gefahr und der Farbe grün unbedenklich bedeutet. Des Weiteren kann die Warnmeldung als akustisches, optisches oder haptisches Signal an einer beliebigen Anzeigeeinrichtung ausgegeben werden. Das Gefährdungspotential kann auch anhand der einzelnen Parameter, insbesondere der Größe der erfassten einzelnen Vögel oder Vogelschwärme (z. B. Anzahl der Vögel im Schwarm bzw. Schwarmdichte) bestimmt werden. Derartige Daten können in einer Datenbank gespeichert sein. Ein zusätzliches Gefährdungspotential kann durch den Flugabstand der einzelnen Vögel zueinander gegeben sein, wenn dieser in etwa dem Abstand der Triebwerke an Flugzeugen entspricht. Eine Kollision mit einem derartigen Vogelschwarm kann sonach zu einem besonders kritischen gleichzeitigen Ausfall mehrerer Triebwerke führen. Insbesondere kann der Faktor Abstand von Einzelvögeln mit dem Faktor der den Abstand der Triebwerke zueinander betrifft, verglichen werden. Falls beide Abstände übereinstimmen, so kann eine sehr hohe Warnstufe ausgegeben werden. Parameterwerte die eine gleichzeitig Gefährdung mehrerer Triebwerke bedeuten rechtfertigen eine hohe Warnstufe.

Die Parameter können mittels Stereo-Mapping bestimmt werden.

Der Flugkorridor oder ein Kreuzungsbereich des Flugkorridors mit bekannten Flugrouten von Vögeln oder Vogelschwärmen kann permanent oder nicht-permanent überwacht werden. Zu bestimmten Zeiten kann die Überwachung, beispielweise während eines nächtlichen Flugverbots, deaktiviert sein.

Informationen über erfasste Vögel oder Vogelschwärme können über die Schnittstelle der wenigstens einen Stereokameraeinrichtung weiterer Stereokameraeinrichtungen oder übergeordneten Systemen, insbesondere Flugsicherungssystemen, zur Verfügung gestellt werden. Die einzelnen Stereokameraeinrichtungen können autonom, d. h. eigenständig arbeiten, sind jedoch insbesondere mittels eines Netzwerks oder Funkübertragung untereinander verbunden. Die Messinformationen wie auch die Aufnahmen stehen somit außerhalb der einzelnen Stereokameraeinrichtungen zur Verfügung. Hauptsächlich werden die Daten bezüglich der Bewertung und/oder der Warnmeldung der Flugsicherung übermittelt. Die Daten können aber auch direkt an Flugzeuge oder beispielsweise den Betrieb eines Windparks übermittelt werden.

Das Überwachungsverfahren kann zumindest teilweise auf einer Bildverarbeitungseinrichtung, insbesondere einer Stereokameraeinrichtung, als Computerprogramm ablaufen. Die Bewertung und die Erzeugung der Warnmeldung kann durch das Computerprogramm der Bildverarbeitungseinrichtung oder aber erst durch die Flugsicherung oder durch die Windparksicherung erfolgen.

Zusätzlich können auch Flugobjekte wie Modellflugzeuge, Lenkdrachen oder dergleichen erfasst und bewertet werden.

In Anspruch 9 ist eine Überwachungsvorrichtung für Flugkorridore oder Teile von Flugkorridoren von Flughäfen mit einer stereoskopischen Erfassung von wenigstens einem sich nähernden oder vorhandenen Vogel oder Vogelschwarm zur Durchführung des erfindungsgemäßen Überwachungsverfahrens angegeben.

In vorteilhafter Weise können die wenigstens zwei Kameras einer Stereokameraeinrichtung zueinander justiert und kalibriert sein. Dadurch wird eine genaue stereoskopische Erfassung ermöglicht.

Sehr vorteilhaft ist es, wenn wenigstens eine Stereokameraeinrichtung als Kameras Infrarotkameras bzw. Wärmebildkameras aufweist. Dadurch kann das System unabhängig von Lichtverhältnissen arbeiten.

Auch bei Dämmerung, bei Nebel oder sonstig eingeschränkter Sicht kann das System betriebsbereit gehalten werden, wenn als bildgebende Sensoren gekühlte oder ungekühlte Wärmebildgeräte verwendet werden. Vögel weisen eine vergleichsweise hohe Körper- bzw. Oberflächentemperatur auf, so dass sie sich von der übrigen Umgebung (beispielsweise Himmel) mit sehr gutem Kontrast abheben und somit leicht detektierbar sind. Die Infrarotkameras bzw. Wärmebildkameras können im mittleren Infrarotbereich (MWIR), insbesondere von etwa 3 $\mu$m bis 5 $\mu$m oder im langwelligen Infrarotbereich, insbesondere von etwa 7 $\mu$m bis 14 $\mu$m, vorzugsweise von etwa 8 $\mu$m bis 12 $\mu$m arbeiten.

Alternativ oder zusätzlich kann wenigstens eine Stereokameraeinrichtung) als Kameras Tagsichtkameras, insbesondere CCD- oder CMOS-Kameras (3a,3b) aufweisen.

Erfindungsgemäß kann ferner vorgesehen sein, dass die wenigstens eine Stereokameraeinrichtung eine Bildverarbeitungseinrichtung aufweist, welche zur Verarbeitung der mit den wenigstens zwei Kameras aufgenommenen Bilddaten und/oder zur Ausführung wenigstens einzelner Verfahrensschritte des erfindungsgemäßen Überwachungsverfahrens, insbesondere als Computerprogramm vorgesehen ist. Auf einer derartigen Bildverarbeitungseinrichtung können die relevanten Parameter hinsichtlich der Vögel oder Vogelschwärme wie Flughöhe, Flugrichtung, Fluggeschwindigkeit, Art, Größe oder Gewicht des wenigstens einen Vogels, Ausdehnung des wenigstens einen Vogelschwarms, Anzahl und Flugabstand der Vögel des wenigstens einen Vogelschwarms sowie ortsspezifische Parameter, wie Tageszeit, Jahreszeit, Temperatur, Windrichtung, Windstärke, Luftdruck und dergleichen ermittelt werden. Ebenso können bekannte Erfahrungswerte eingegeben werden. Beispielsweise kann es an bestimmten Kreuzungsbereichen der Vogelflugrouten, beispielsweise mit einer Zugstrecke, zu einem Thermiksegeln, d. h. einem Aufsteigen der Vögel in höhere Lagen, beispielsweise aufgrund von Aufwinden durch höhere Temperaturen, kommen. Derartige Erfahrungswerte können die Flugprognosen und damit das Gefährdungspotential maßgeblich beeinflussen.

In einer konstruktiven Ausgestaltung der Erfindung kann vorgesehen sein, dass die wenigstens eine Stereokameraeinrichtung wenigstens eine Schnittstelle, insbesondere Netzwerkschnittstelle, zur kabelgebundenen (z. B. über Glasfaserkabel oder dergleichen) oder kabellosen (z. B. über eine Funkverbindung oder dergleichen) Kommunikation mit weiteren Stereokameraeinrichtungen und/oder mit wenigstens einem übergeordneten System, insbesondere Flugsicherungssystem, aufweist. Über eine derartige Schnittstelle, beispielsweise eine Funkstation, können dann Warnmeldungen hinsichtlich entdeckter bzw. erfasster Vögel bzw. Vogelschwärme an weitere Stereokameraeinrichtungen der Überwachungsvorrichtung bzw. an weitere insbesondere übergeordnete Systeme wie Flugsicherungssysteme oder dergleichen bzw. an Lotsen im Flughafentower übermittelt werden. Anschließend können entsprechende Gegenmaßnahmen eingeleitet oder Flugzeuge benachrichtigt werden. Die einzuleitenden Gegenmaßnahmen können als Empfehlung formuliert Bestandteil der Warnmeldung sein. Ebenso kann die Warnmeldung u. a. enthalten: prognostizierte Zeit bis zum Eintreffen der Vögel oder des Vogelschwarms an einem definierten Ort, z. B. Landebahn in einer Flughöhe von 75 m und/oder die Dauer der Passage.

Die wenigstens eine Stereokameraeinrichtung kann autonom, d. h. autark oder eigenständig als Stand-Alone-Gerät arbeiten, welche dementsprechend separat die Parameterwerte ermitteln kann. Die Bewertung und das Ausgeben der Warnmeldung können ebenfalls in der wenigstens einen Stereokameraeinrichtung erfolgen oder aber z. B. bei der Flugsicherung.

Durch die wenigstens zwei Blickwinkel auf den durch die wenigstens zwei Kameras der wenigstens einen Stereokameraeinrichtung aufgenommenen Bereich kann der absolute Raumpunkt jedes Vogels bzw. können die absoluten Raumpunkte des wenigstens einen zu erfassenden Vogels und/oder des wenigstens einen zu erfassenden Vogelschwarms bestimmt werden. Aus dieser Berechnung ergibt sich direkt die Flughöhe der Vögel bzw. Vogelschwärme. Die Fluggeschwindigkeit der Vögel oder der Vogelschwärme kann durch eine Betrachtung über eine entsprechende Zeitspanne bestimmt werden.

Der wenigstens eine Vogel oder der wenigstens eine Vogelschwarm kann in einer Entfernung von etwa 50 m bis etwa 3 km, insbesondere von etwa 200 m bis etwa 700 m, vorzugsweise etwa 400 m erfassbar sein, wobei die wenigstens zwei Kameras einer Stereokameraeinrichtung eine entsprechende Brennweite aufweisen. Auch Vögel oder Vogelschwärme in größerer Entfernung können erfasst werden. Dazu werden entsprechend längere Brennweiten für die wenigstens zwei Kameras verwendet. Somit ist eine frühzeitige Erfassung möglich. Da bereits ein einzelner Vogel einen schweren Schaden verursachen kann, können mit dem erfindungsgemäßen Überwachungsverfahren oder der erfindungsgemäßen Überwachungsvorrichtung auch einzelne Vögel erfasst werden. Durch die Klassenbildung kann das Gefährdungspotential als Klasse eingestuft werden. So ist ein einzelner Spatz eher ungefährlich und sollte keine Warnmeldung bewirken, wohingegen eine einzelne Wildgans schon größeres Zerstörungspotential aufweist.

Da Vogelschwärme je nach örtlichen Verhältnissen von zwei oder mehreren Seiten anfliegen können, sollte das System alle erforderlichen Richtungen überwachen. Die Informationen der einzelnen Stereokameraeinrichtungen oder der einzelnen Messstandorte können kombiniert werden. Zusätzlich kann der Flugkorridor und/oder die Start- und Landebahnen der Flugzeuge bzw. der Kreuzungsbereich des Flugkorridors mit den Flugrouten der Vögel überwacht werden, um auch einen Aufenthalt von Vögeln im gefährlichen Bereich zu erkennen und gegebenenfalls eine Warnung zu generieren. Für die Bewertung kann berechnet werden, wann die Vögel oder die Vogelschwärme einen bestimmten Ort, z. B. einen Flugkorridor oder eine Start- und Landebahn schneiden, also es zu einem Vogelschlag kommen könnte. Die Überwachung kann gegebenenfalls permanent erfolgen.

Die wenigstens eine Stereokameraeinrichtung kann in einem vorab ermittelten ausreichendem Abstand, der insbesondere von etwa 0,5 km bis etwa 10 km, vorzugsweise etwa 1 km bis etwa 4 km von dem Kreuzungsbereich des Flugkorridors oder Teilen des Flugkorridors mit bekannten Vogelflugrouten oder von der Start- bzw. Landeschwelle wenigstens einer Start- und Landebahn angeordnet sein. Die wenigstens eine Stereokameraeinrichtung sollte in ausreichendem Abstand vor dem Kreuzungsbereich bzw. vor der Start- bzw. Landeschwelle der Start- und Landebahnen angeordnet sein. Vorteilhaft ist es, wenn sich der vorab ermittelte Abstand $d_x$ der wenigstens einen Stereokameraeinrichtung ohne Beachtung von Störgrößen, aus dem Produkt der bei vorgegebener Flughöhe maximal auftretenden Fluggeschwindigkeit $v_{vogel}$ der beobachteten Vögel oder Vogelschwärme und der notwendigen minimalen Vorwarnzeit $t_{min}$ ergibt. Durch diese Maßnahme kann eine minimale Vorwarnzeit gewährleistet werden.

In einer konstruktiven Ausgestaltung der Erfindung kann vorgesehen sein, dass wenigstens zwei Stereokameraeinrichtungen in einem Abstand zueinander übereinander, insbesondere in einem gemeinsamen Gehäuse, angeordnet sind. Dadurch ist es einfach möglich ein entsprechendes vertikales Sehfeld an einem Messstandort abzudecken.

Die Hauptachsen der Sehfelder der wenigstens einen oben angeordneten Stereokameraeinrichtung können zu den Hauptachsen der Sehfelder der wenigstens einen darunter angeordneten Stereokameraeinrichtung vertikal geneigt sein, wodurch beispielsweise nur ein gemeinsames Sichtfenster in dem gemeinsamen Gehäuse verwendet werden kann.

Vorteilhaft ist es, wenn wenigstens eine redundante Stereokameraeinrichtung derart, insbesondere in einem Abstand von etwa 500 m, zu wenigstens einer weiteren Stereokameraeinrichtung angeordnet ist, dass im laufenden Betrieb der Überwachungsvorrichtung durch eine Berücksichtigung der Messergebnisse der wenigstens einen redundanten Stereokameraeinrichtung eine Erhöhung der Genauigkeit erreichbar ist.

Zur Erhöhung der Zuverlässigkeit bzw. Genauigkeit der stereoskopischen Detektion der Vögel oder Vogelschwärme können ermittelte Detektionsdaten bzw. Parameter von Stereokameraeinrichtungen mit Daten von eventuell redundant vorhandenen weiteren Stereokameraeinrichtungen zur Überprüfung der Plausibilität abgeglichen werden. Derartige aktive Standbysysteme können z. B. in einem Abstand von 500 m angeordnet sein und dieselbe Ausrichtung aufweisen. Damit kann etwa eine z. B. aufgrund einer aufgetretenen Windböe zu hoch berechnete Geschwindigkeit eines Vogelschwarms korrigiert werden. Die redundanten Systeme sind grundsätzlich vorgesehen, um bei einem Ausfall einer Stereokameraeinrichtung unmittelbar die ausgefallene Funktion zu übernehmen, sodass die Überwachungsvorrichtung weiterarbeiten kann.

Erfindungsgemäß kann ferner vorgesehen sein, dass wenigstens eine Stereokameraeinrichtung in einem Abstand $x = \dfrac{h}{\tan \alpha}$ von dem Beobachtungsgebiet angeordnet ist, wobei h die mittlere Höhe des Beobachtungsgebiets und $\alpha$ der vertikale Neigungswinkel zur Horizontalebene der Hauptachsen der Sehfelder der wenigstens einen Stereokameraeinrichtung ist.

Nachfolgend ist anhand der Zeichnung prinzipmäßig ein Ausführungsbeispiel der Erfindung beschrieben. Vorteilhafte Ausgestaltungen und Weiterbildungen ergeben sich aus den Unteransprüchen.

Es zeigen:

Figur 1 eine schematische Darstellung einer Stereokameraeinrichtung einer erfindungsgemäßen Überwachungsvorrichtung;

Figur 2 eine vereinfachte Darstellung einer Anordnung der Stereokameraeinrichtung aus Figur 1 im Bereich eines Flugkorridors eines Flugzeugs;

Figur 3 eine schematische Darstellung einer beispielhaften Anordnung mehrerer Stereokameraeinrichtungen im Bereich eines Flugkorridors;

Figur 4 eine schematische seitliche Ansicht von zwei in einem gemeinsamen Gehäuse übereinander angeordneten Stereokameraeinrichtungen;

Figur 5 eine schematische Darstellung einer weiteren Ausführungsform einer Anordnung mehrerer Stereokameraeinrichtungen im Bereich eines Flugkorridors und entlang einer bekannten Vogelflugroute; und

Figur 6 eine schematische Darstellung zur Ermittlung des Abstands des Messstandorts der Stereokameraeinrichtung von dem Beobachtungsgebiet.

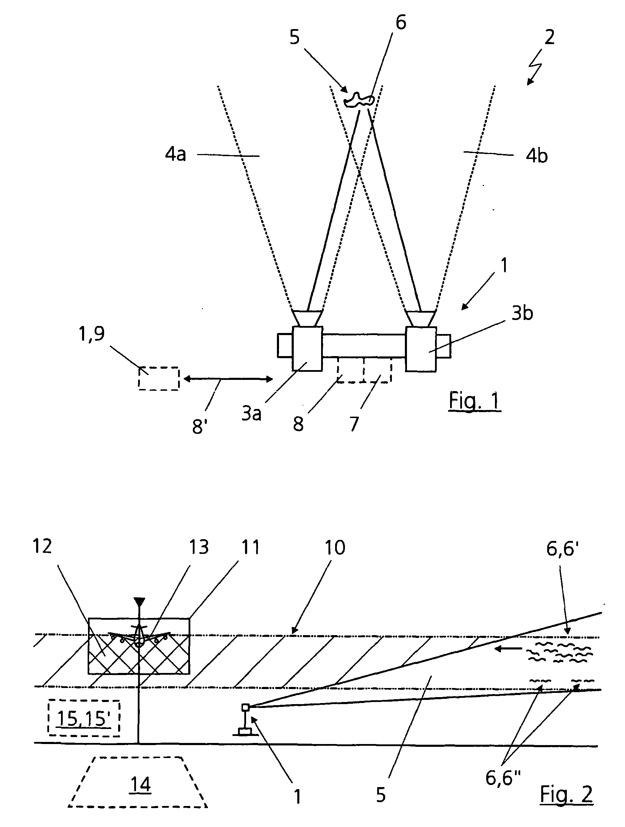

In **Figur 1** ist eine Stereokameraeinrichtung 1 einer Überwachungsvorrichtung 2 für Start- und Landebahnen 14, Flugkorridore 11 und/oder Teile von Flugkorridoren 11 (siehe **Figuren 2, 3 und** 5) von Flughäfen mit einer stereoskopischen Erfassung von wenigstens einem sich nähernden oder vorhandenen Vogel 6 oder Vogelschwarm 6', 6", wobei wenigstens einzelne Parameter des wenigstens einen Vogels 6 oder des wenigstens einen Vogelschwarms 6', 6" aus der Gruppe Flughöhe, Flugrichtung, Fluggeschwindigkeit, Art, Größe oder Gewicht des wenigstens einen Vogels 6, Ausdehnung des wenigstens einen Vogelschwarms 6', 6" Anzahl und Flugabstand der Vögel 6 des wenigstens einen Vogelschwarms 6', 6" ermittelbar sind, dargestellt. Eine oder mehrere derartiger Stereokameraeinrichtungen 1 ,1', 1" , 1a, 1b sind im Bereich der Start- und Landebahnen 14 und/oder der Flugkorridore 11 angeordnet (siehe **Figuren 2, 3 und 5**) und weisen wenigstens zwei zueinander in definiertem Abstand angeordnete während der Aufnahme synchron laufende Kameras 3a, 3b auf. Die Aufnahmezeitpunkte der Kameras 3a, 3b sind wenigstens annähernd identisch und deren jeweilige Sehfelder 4a, 4b weisen einen überlappenden Bereich 5 auf. In dem überlappenden Bereich 5 wird als Objekt ein Vogel 6 erfasst. Die zwei Kameras 3a, 3b sind zueinander justiert und kalibriert. Die Stereokameraeinrichtung 1, 1', 1" weist als Kameras Infrarotkameras bzw. Wärmebildkameras 3a, 3b auf. Im vorliegenden Ausführungsbeispiel sind beide Kameras 3a, 3b als Wärmebildkameras ausgebildet. In weiteren Ausführungsbeispielen könnten die Kameras 3a, 3b einer Stereokameraeinrichtung 1, 1', 1" , 1a, 1b auch Tagsichtkameras, beispielsweise CCD-Kameras, CMOS-Kameras oder dergleichen sein. Als Kameras 3a, 3b können somit Kameras im visuellen Bereich und/oder im Wärmebildbereich, z. B. LWIR, MWIR, VLWIR, FIR, als auch im SWIR, NIR und UV-Bereich dienen. Es sind auch andere bildgebende Darstellungen vorstellbar. Die Wärmebildkameras 3a, 3b arbeiten im mittleren Infrarotbereich (MWIR), insbesondere von etwa 3 $\mu$m bis 5 $\mu$m oder im langwelligen Infrarotbereich, insbesondere von etwa 7 $\mu$m bis 14 $\mu$m, vorzugsweise von etwa 8 $\mu$m bis 12 $\mu$m.

Ein System und ein Verfahren zur Erzeugung von räumlichen Bilddarstellungen, insbesondere von räumlichen Wärmebildern, ist in der EP 1 484 628 A1 angegeben.

Die Stereokameraeinrichtung 1 weist eine Bildverarbeitungseinrichtung 7 auf, welche zur Verarbeitung der mit den zwei Kameras 3a, 3b aufgenommenen Bilddaten und zur Ausführung wenigstens einzelner Verfahrensschritte des erfindungsgemäßen Überwachungsverfahrens als Computerprogramm, vorgesehen ist.

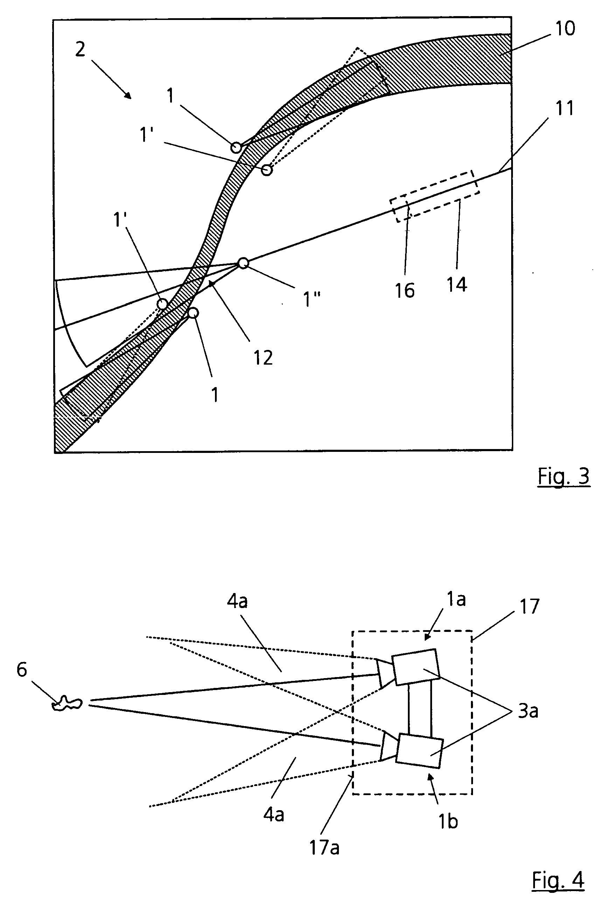

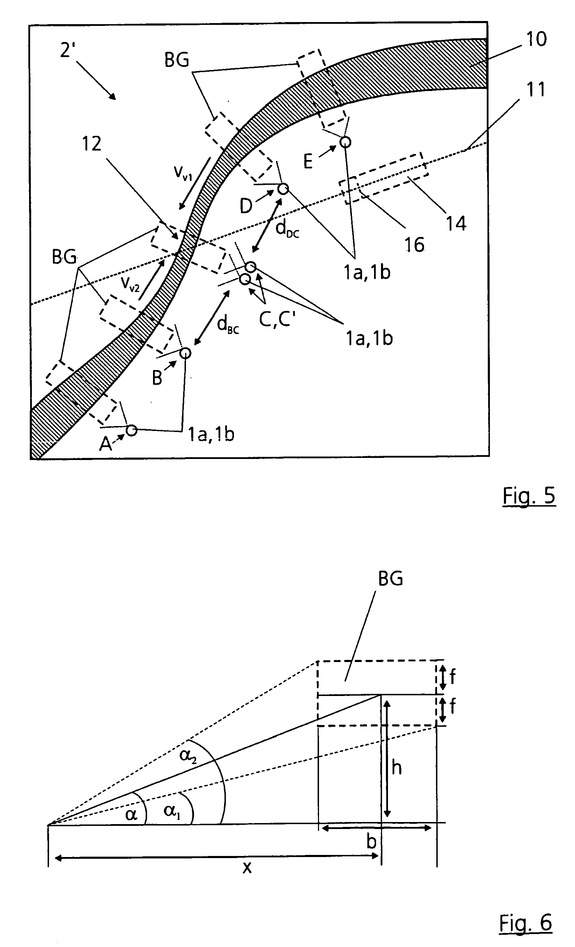

Die Stereokameraeinrichtung 1 weist darüber hinaus eine Funkstation 8 als wenigstens eine Schnittstelle, insbesondere Netzwerkschnittstelle, zur Kommunikation mit weiteren Stereokameraeinrichtungen 1, 1', 1" und/oder mit wenigstens einem übergeordneten Systemen, insbesondere Flugsicherungssystemen 9, auf (in F**igur 1** ist die Kommunikationsmöglichkeit durch den Doppelpfeil 8' angedeutet). Die Stereokameraeinrichtung 1 arbeitet autonom, d. h. eigenständig. Sie kann unabhängig von anderen Stereokameraeinrichtungen 1, 1', 1" , 1a, 1b Daten an die Flugsicherung übermitteln. Jedoch können mittels der Vernetzung bzw. der Funkübertragung über die Funkstation 8 weitere Stationen bzw. Stereokameraeinrichtungen 1, 1', 1" , 1a, 1b (siehe **Figuren 3 und** 5) verbunden sein. Als Funkübertragung kann Richtfunk, beispielsweise schmalbandig oder breitbandig, insbesondere redundant eingesetzt werden. Alternativ oder zusätzlich können zur Kommunikation Kabelverbindungen, insbesondere DSL oder dergleichen, vorgesehen sein. Die Informationen wie auch die Aufnahmen stehen somit ebenfalls außerhalb der einzelnen Stationen zur Verfügung. Hauptsächlich werden diese Daten der Flugsicherung übermittelt.

Auf der Bildverarbeitungseinrichtung 7, welche in anderen Ausführungsbeispielen auch bei der Flugsicherheit angeordnet sein kann, der Stereokameraeinrichtung 1 läuft ein Überwachungsverfahren für Start- und Landebahnen 14 Flugkorridore 11 und/oder Teile von Flugkorridoren 11 von Flughäfen ab, mit welchem wenigstens ein sich nähernder oder vorhandener Vogel 6 oder Vogelschwarm 6',6" stereoskopisch mittels der Überwachungsvorrichtung 2 bzw. der Stereokameraeinrichtung 1, 1',1" , 1a, 1b erfasst wird, wobei wenigstens einzelne Parameter des wenigstens einen Vogels 6 oder des wenigstens einen Vogelschwarms 6',6" aus der Gruppe Flughöhe, Flugrichtung, Fluggeschwindigkeit, Art, Größe oder Gewicht des wenigstens einen Vogels 6, Ausdehnung des wenigstens einen Vogelschwarms 6',6", Anzahl und Flugabstand der Vögel 6 des wenigstens einen Vogelschwarms 6',6" ermittelt werden, wobei eine Vorhersage über einen Ankunftszeitpunkt und eine Flughöhe eines erfassten wenigstens einen Vogels 6 oder eines erfassten wenigstens einen Vogelschwarms 6',6" an einem Kreuzungsbereich 12 (siehe **Figur 2**) mit dem Flugkorridor 11 oder Teilen des Flugkorridors 11 mittels der einzelnen Parameter unter Berücksichtigung ornithologischer Studien oder Daten, welche, insbesondere eine konstante Fluggeschwindigkeit und Flugrichtung in bestimmten Flughöhen der Vögel, insbesondere zwischen beabstandeten Messpunkten, zeigen, biologischer Faktoren und zusätzlicher ortsspezifischer Parameter, bestimmt wird, anhand der eine Bewertung durchgeführt und gegebenenfalls eine entsprechende Warnmeldung zur Einleitung von Gegenmaßnahmen, Minderungs- oder Vermeidungsmaßnahmen von Vogelschlag an ein übergeordnetes System, insbesondere das Flugsicherungssystem 9 und/oder an wenigstens ein startendes oder landendes Flugzeug 13 ausgegeben wird. Ergänzend kann auch direkt auf die erfassten Vögel eingewirkt werden, beispielsweise mittels Raubvogelschrei oder dergleichen. Die Parameter werden mittels Stereo-Mapping oder einer Stereoauswertung bestimmt. Durch die wenigstens zwei Blickwinkel auf den durch die wenigstens zwei Kameras 3a, 3b der Stereokameraeinrichtung 1, 1', 1" , 1a, 1b aufgenommenen Bereich 5 werden absolute Raumpunkte der zu erfassenden Vögel 6 oder Vogelschwärme 6',6" bestimmt. Die Fluggeschwindigkeit der Vögel 6 oder der Vogelschwärme 6',6 " wird durch eine Betrachtung über eine entsprechende Zeitspanne bestimmt. Auch Vögel 6 oder Vogelschwärme 6',6" in größerer Entfernung, beispielsweise von etwa 50 m bis etwa 3 km, insbesondere von etwa 200 m bis etwa 700 m, vorzugsweise 400 m, können erfasst werden, wobei eine entsprechend längere Brennweite für die zwei Kameras 3a, 3b verwendet wird. Zusätzlich können auch Flugobjekte wie Modellflugzeuge, Lenkdrachen oder dergleichen von der Stereokameraeinrichtung 1, 1', 1" , 1a, 1b erfasst werden (nicht dargestellt).

Informationen über erfasste Vögel 6 oder Vogelschwärme 6', 6" werden über die Schnittstelle bzw. die Funkstation 8 der Stereokameraeinrichtung 1 weiteren Stereokameraeinrichtungen 1, 1', 1" , 1a, 1b oder übergeordneten Systemen, insbesondere Flugsicherungssystemen 9, zur Verfügung gestellt.

Bei der Bewertung kann anhand der Parameter, z. B. der Größe der erfassten Vögel 6 oder der erfassten Vogelschwärme 6', 6" ein Gefährdungspotential bzw. die Flugsicherheitsrelevanz bestimmt werden. Das Gefährdungspotential ist in mehrere unterschiedliche Klassen, beispielweise 2 bis 5 Klassen, eingeteilt, anhand derer die entsprechend auszugebende Warnmeldung bestimmt wird. Bei der Bewertung werden, insbesondere die in dieser Anmeldung genannten, biologischen Faktoren bzw. ornithologischen Studien und/oder ortsspezifischen Parameter berücksichtigt.

Wie aus **Figur 2** ersichtlich, überwacht eine Stereokameraeinrichtung 1 mit einem Stereosichtbereich bzw. überlappenden Bereich 5 eine bekannte Vogelflugroute 10 von Vögeln 6 und/oder Vogelschwärmen 6', 6". Die Stereokameraeinrichtung 1 ist dabei so angeordnet, dass ein Flugkorridor 11 bzw. ein Kreuzungsbereich 12 des Flugkorridors 11 mit der bekannten Vogelflugroute 10 der Vögel 6 oder Vogelschwärme 6', 6" überwacht wird. Im Flugkorridor 11 ist ein Flugzeug 13 beispielhaft dargestellt. Ein Ankunftszeitpunkt der erfassten Vögel 6 oder der erfassten Vogelschwärme 6' ,6" an dem Kreuzungsbereich 12 mit dem Flugkorridor 11 des Flugzeugs 13 kann ebenfalls bestimmt werden. Um eine präzise Vorhersage über den Ankunftszeitpunkt der erfassten Vögel 6 oder der erfassten Vogelschwärme 6', 6" machen zu können, ist die Stereokameraeinrichtung 1 auf die bekannte Flugroute 10 der Vögel 6 oder Vogelschwärme 6', 6" ausgerichtet. Darüber hinaus können weitere Stereokameraeinrichtungen 1, 1', 1" , 1a, 1b insbesondere in größeren Entfernungen von dem Kreuzungsbereich 12 (z. B. mehrere Kilometer), vorzugsweise entlang der bekannten Vogelflugroute 10 der Vögel 6 oder Vogelschwärme 6', 6" angeordnet sein (siehe auch **Figuren 3 und 5**).

Bei Erfassung von Vögeln 6 oder Vogelschwärmen 6', 6" wird gegebenenfalls eine Warnmeldung zur Einleitung von Gegenmaßnahmen bzw. Minderungs- oder Vermeidungsmaßnahmen an das übergeordnete System, insbesondere Flugsicherungssystem 9, und/oder an Flugzeuge 13, insbesondere startende oder landende Flugzeuge 13 ausgegeben.

Ein zusätzliches Gefährdungspotential kann, wie in **Figur 2** stark vereinfacht dargestellt, durch den Flugabstand der Vögel 6 des Vogelschwarms 6" gegeben sein, wenn dieser in etwa dem Abstand der Triebwerke des Flugzeugs 13 entspricht. Eine Kollision mit einem derartigen Vogelschwarm 6" kann sonach zu einem besonders kritischen gleichzeitigen Ausfall mehrerer Triebwerke des Flugzeugs 13 führen. Dies kann bei der Bewertung berücksichtigt werden. Insbesondere kann der Faktor Abstand von Einzelvögeln 6 mit einem Faktor der den Abstand der Triebwerke zueinander, insbesondere bei unterschiedlichen Flugzeugtypen, betrifft, verglichen werden. Falls beide Abstände übereinstimmen, so kann eine sehr hohe Warnstufe ausgegeben werden. Parameterwerte die eine gleichzeitig Gefährdung mehrerer Triebwerke bedeuten rechtfertigen eine hohe Warnstufe.

Wie weiter in **Figur 2** gestrichelt angedeutet, können mit dem erfindungsgemäßen Überwachungsverfahren und/oder der erfindungsgemäßen Überwachungsvorrichtung auch Windkraftanlagen 15 und/oder empfindliche Gebäude mit transparenten Bereichen 15', großflächige Glasscheiben oder dergleichen, überwacht werden.

In **Figur 3** ist eine erfindungsgemäße Überwachungsvorrichtung 2 mit Stereokameraeinrichtungen 1, 1', 1" an entsprechenden Messstandorten dargestellt. Als Vogelflugroute 10 der Vögel 6 ist in Figur 3 ein Fluss schraffiert angedeutet, über dem die nicht dargestellten Vögel 6, 6', 6" z. B. in einer Höhe von ca. 100 m fliegen. Die Vogelflugroute 10 könnte jedoch in anderen Ausführungsbeispielen auch ein Tal oder ein sonstiger Geländezug sein. Die Vogelflugroute 10 kreuzt den Flugkorridor 11 für Flugzeuge 13 in einem Kreuzungsbereich 12. Der Kreuzungsbereich 12 wird von der Stereokameraeinrichtung 1", insbesondere permanent überwacht. Des weiteren wird die Vogelflugroute 10 auf beiden Seiten des Flugkorridors 11 von Stereokameraeinrichtungen 1, 1' überwacht. In anderen Ausführungsbeispielen könnte auch oder alternativ der Flugkorridor 11 oder Teile des Flugkorridors 11, insbesondere komplett und/oder permanent überwacht werden. Die Stereokameraeinrichtungen 1, 1' könnten beispielsweise bis 10 km, insbesondere 1 km bis 3 km vor dem Kreuzungsbereich 12 angeordnet sein. Im vorliegenden Ausführungsbeispiel sind die Stereokameraeinrichtungen 1, 1' redundant, beispielsweise mit überlappendem Sichtbereich 5, ausgelegt, um die Erfassungswahrscheinlichkeit weiter zu erhöhen. Vorzugsweise sind die Kameras derart, beispielsweise in einer Höhe von 10 m angeordnet, dass sie nicht von etwaigem Bodennebel beeinträchtigt werden können. Wie aus **Figur 3** ersichtlich, sind die Stereokameraeinrichtungen 1, 1', 1" in einem Abstand vor einer Start- bzw. Landeschwelle 16 der Start- und Landebahn 14 angeordnet. Des Weiteren sind die Stereokameraeinrichtungen 1, 1', 1" in ausreichendem Abstand vor dem Kreuzungsbereich 12 angeordnet, um eine entsprechende Vorwarnzeit von beispielsweise 2 bis 10 Minuten zu erhalten.

In **Figur 4** sind zwei Stereokameraeinrichtungen 1a, 1b (siehe **Figur 1**) mit je zwei Wärmebildkameras 3a, 3b in einem Abstand zueinander übereinander in einem gemeinsamen gestrichelt angedeuteten Gehäuse 17 als oben angeordnete Stereokameraeinrichtung 1a und darunter angeordnete Stereokameraeinrichtung 1b vorgesehen. Die Hauptachsen der Sehfelder 4a, 4b der oben angeordneten Stereokameraeinrichtung 1a sind zu den Hauptachsen der Sehfelder 4a, 4b der darunter angeordneten Stereokameraeinrichtung 1b geneigt, wodurch für beide Stereokameraeinrichtungen 1a, 1b in dem Gehäuse 17 dasselbe Sichtfenster 17a verwendet werden kann.

In **Figur 5** ist eine weitere Ausführungsform einer erfindungsgemäßen Überwachungsvorrichtung 2' mit insgesamt zwölf Stereokameraeinrichtungen 1a, 1b an sechs Messstandorten A, B, C, C', D und E dargestellt. Als Vogelflugroute 10 der Vögel 6, insbesondere Lachmöwen, ist in **Figur 5** wiederum ein Fluss schraffiert angedeutet, über dem die nicht dargestellten Vögel 6, 6', 6" z. B. in einer Höhe von etwa 50 m bis 100 m fliegen, wobei auch Schwarmhöhen von bis zu 300 m beobachtet wurden. Die Sichtbereiche der Stereokameraeinrichtungen 1a, 1b verlaufen senkrecht bzw. quer zu der Vogelzugrichtung entlang der Vogelflugroute 10. Die Stereokameraeinrichtungen 1a, 1b sind auf die bekannte Vogelflugroute 10 ausgerichtet und entlang der bekannten Vogelflugroute 10 angeordnet. Dadurch wird eine präzise Vorhersage der Ankunftszeitpunkte von Vögeln 6 oder Vogelschwärmen 6', 6" am Kreuzungsbereich 12 ermöglicht. Die in **Figur 5** nicht näher dargestellten insgesamt 24 Wärmebildkameras 3a, 3b der Stereokameraeinrichtungen 1a, 1b weisen jeweils eine Auflösung von 640x512 Bildpunkten auf. Die Stereokameraeinrichtungen 1a, 1b sind in einer Höhe von etwa 10 m angeordnet. Die Stereokameraeinrichtungen 1a, 1b an den Messstandorten B und D sind in einem vorab ermittelten Abstand $d_{BC}$ und $d_{CD}$, insbesondere von etwa 0,5 km bis etwa 10 km, vorzugsweise etwa 1 km bis etwa 4 km von dem Kreuzungsbereich 12 des Flugkorridors 11 mit der bekannten Vogelflugroute 10 oder von der Start- bzw. Landeschwelle 16 der Start- und Landebahn 14 angeordnet. Die vorab ermittelten Abstände $d_{BC}$ und $d_{CD}$ der Messstandorte B und D oder Stereokameraeinrichtungen 1a, 1b ergeben sich ohne Beachtung von Störgrößen, aus dem Produkt der bei vorgegebener Flughöhe maximal auftretenden Fluggeschwindigkeiten $v_{v1}$, $v_{v2}$ der beobachteten Vögel 6 oder Vogelschwärme 6', 6" und der notwendigen minimalen Vorwarnzeit $t_{min}$, insbesondere von 2 Minuten bis 10 Minuten, ergibt. Analog ergeben sich die Positionen der übrigen Messstandorte A und E. Die Anflughöhe bzw. die Höhe des Flugkorridors 11 liegt im vorliegenden Ausführungsbeispiel insbesondere im Kreuzungsbereich 12 etwa bei 120 m ± 30 m, also zwischen 90 m und 150 m. Sonach liegt die Höhe der von den Stereokameraeinrichtungen 1a, 1b zu überwachenden entlang der Vogelflugroute 10 gelegenen Beobachtungsgebiete BG ebenfalls zwischen 90 m und 150 m (siehe auch **Figur 6**). Die Breite b der Beobachtungsgebiete BG ergibt sich z. B. aus der Breite des Flusses bzw. der Vogelflugroute 10, insbesondere an dem Kreuzungsbereich 12 zuzüglich entsprechender Sicherheitsbereiche. Die Messstandorte A, B dienen zur Vorwarnung von von links unten nach rechts oben (siehe **Figur 5**) entlang der Vogelflugroute 10 fliegenden Vögeln 6 oder Vogelschwärmen 6', 6" , während die Messstandorte D, E zur Vorwarnung von von rechts oben nach links unten entlang der Vogelflugroute 10 fliegenden Vögeln 6 oder Vogelschwärmen 6', 6" dienen. Sowohl die Messstandorte A und B als auch die Messstandorte D und E sind zueinander redundant ausgelegt und insbesondere in einem Abstand von etwa 500 m, zueinander angeordnet. Die Messstandorte C und C' sind ebenfalls zueinander redundant ausgelegt und dienen der Überwachung des Kreuzungsbereichs 12. Dort können insbesondere Vögel 6 erfasst werden, welche die lokale Thermik zum weiteren Aufstieg nutzen und häufig in sogenannten Thermikschlauchformationen fliegen. Im laufenden Betrieb der Überwachungsvorrichtung 2' wird durch eine Berücksichtigung der Messergebnisse der redundanten Stereokameraeinrichtungen 1a, 1b an den Messstandorten A, B, C, C' D und E eine Erhöhung der Genauigkeit erreicht. Der Abstand der Messstandorte A, B, C, C', D und E zur Flussmitte beträgt jeweils etwa 300 m. Der Neigungswinkel $\alpha$ der Hauptachsen der Sehfelder 4a, 4b der Stereokameraeinrichtungen 1a, 1b zur Horizontalebene beträgt etwa 10,8 Grad.

Wie aus **Figur 6** ersichtlich, können die Stereokameraeinrichtungen 1a, 1b können in einem Abstand

$$x = \frac{h}{\tan \alpha}$$ von dem Beobachtungsgebiet BG angeordnet sein, wobei h die mittlere Höhe, insbesondere 120 m, des Beobachtungsgebiets BG und $\alpha$ der vertikale Neigungswinkel zur Horizontalebene der Hauptachsen der Sehfelder 4a, 4b der Stereokameraeinrichtungen 1a, 1b ist. Ebenso können die äußeren vertikalen Neigungswinkel $\alpha 1$ und $\alpha 2$ der Sehfelder 4a, 4b mittels

$$\tan \alpha_1 = \frac{h - f}{x + b/2}$$ und

$$\tan \alpha_2 = \frac{h + f}{x - b/2}$$ berechnet werden, wobei f den jeweiligen Abstand, insbesondere 30 m, der minimalen Höhe und der maximalen Höhe von der mittleren Höhe h des Beobachtungsgebiets BG angibt. Der notwendige horizontale Winkel der Stereokameraeinrichtungen 1a, 1b kann sich dann direkt aus dem Videoverhältnis 4:3 bzw. 16:9 oder dergleichen ergeben.

Bezugszeichenliste

| | |
|---|---|
| 1,1',1" | Stereokameraeinrichtungen |
| 1a,1b | Stereokameraeinrichtungen |
| 2,2' | Überwachungsvorrichtungen |
| 3a,3b | Wärmebildkameras |
| 4a,4b | Sehfelder |
| 5 | überlappender Bereich |
| 6,6',6 " | Vögel, Vogelschwärme |
| 7 | Bildverarbeitungseinrichtung |
| 8 | Schnittstelle |
| 9 | Flugsicherungssystem |
| 10 | Vogelflugroute |
| 11 | Flugkorridor |
| 12 | Kreuzungsbereich |
| 13 | Flugzeug |
| 14 | Start- und Landebahn |
| 15 | Windkraftanlage |
| 15' | Gebäude mit transparenten Bereichen |
| 16 | Start- bzw. Landeschwelle |
| 17 | Gehäuse |
| 17a | Sichtfenster des Gehäuses |
| A,B | Messstandorte |
| D,E | Messstandorte |
| C,C' | Messstandorte |
| BG | Beobachtungsgebiet |
| $v_{v1}$ | maximale Vogelgeschwindigkeit |
| $V_{v2}$ | maximale Vogelgeschwindigkeit |
| $d_{BC}$ | Abstand |
| $d_{DC}$ | Abstand |
| x,f | Abstände |
| h | mittlere Höhe |
| b | Breite des Beobachtungsgebiets |
| $\alpha, \alpha_1, \alpha_2$ | Neigungswinkel |

**Patentansprüche**

1. Überwachungsverfahren für Flugkorridore (11) oder Teile von Flugkorridoren (11) von Flughäfen, mit welchem wenigstens ein sich den Flugkorridoren (11) oder den Teilen von Flugkorridoren (11) nähernder Vogel (6) oder Vogelschwarm (6') stereoskopisch von mehreren im Bereich der Flugkorridore (11) entlang einer bekannten Vogelflugroute (10) in einem vorab ermittelten Abstand $d_x$ von dem Kreuzungsbereich (12) des Flugkorridors (11) oder der Teile des Flugkorridors (11) mit der bekannten Vogelflugroute (10), wobei der Abstand $d_x$ etwa 0,5 km bis etwa 10 km beträgt und sich ohne Beachtung von Störgrößen, aus dem Produkt der bei vorgegebener Flughöhe maximal auftretenden Fluggeschwindigkeit $V_{vogel}$ ($V_{v1}$, $V_{v2}$) der beobachteten Vögel (6) oder Vogelschwärme (6',6") und der notwendigen minimalen Vorwarnzeit $t_{min}$ ergibt, angeordneten Stereokameraeinrichtungen (1, 1', 1", 1a,1b), welche als Kameras Wärmebildkameras (3a,3b) aufweisen, und welche auf die bekannte Vogelflugroute (10) ausgerichtet sind, erfasst wird, wobei die minimale Höhe des Flugkorridors mit der minimalen Höhe von Beobachtungsgebieten übereinstimmt und die maximale Höhe des Flugkorridors mit der maximalen Höhe der Beobachtunsgebiete übereinstimmt wobei die Stereokameraeinrichtungen (1', 1", 1a, 1b) in einem Abstand , $x = \dfrac{h}{\tan \alpha}$ von dem Beobachtungsgebiet (BG) angeordnet sind, wobei h die mittlere Höhe des Beobachtungsgebiets (BG) und $\alpha$ der vertikale Neigungswinkel zur Horizontalebene der Hauptachsen der Sehfelder (4a,4b) der Steokameraeinrichtungen (1,1',1",1a,1b) ist wobei die äußeren vertikale Neigung $\alpha_1$ und $\alpha_2$ des Sehfeldes (4a, 4b) mittels $\tan \alpha_1 = \dfrac{h-f}{x+\frac{b}{2}}$

und $\alpha_2 = \dfrac{h+f}{x-\frac{b}{2}}$ berechnet werden, wobei f den jeweiligen Abstand der minimalen Höhe und der maximalen Höhe von der mittleren Höhe des Beobachtungsgebiets (B6) angibt, wobei b die Breite des Beobachtungsgebiets (BG) ist, wobei wenigstens Flughöhe, Flugrichtung und Fluggeschwindigkeit als einzelne Parameter des wenigstens einen Vogels (6) oder des wenigstens einen Vogelschwarms (6', 6'') aus der Gruppe Flughöhe, Flugrichtung, Fluggeschwindigkeit, Art, Größe oder Gewicht des wenigstens einen Vogels (6), Ausdehnung des wenigstens einen Vogelschwarms (6',6"), Anzahl und Flugabstand der Vögel (6) des wenigstens einen Vogelschwarms (6',6") ermittelt werden, wobei eine Vorhersage über einen Ankunftszeitpunkt und eine Flughöhe eines erfassten wenigstens einen Vogels (6) oder eines erfassten wenigstens einen Vogelschwarms (6',6") an einem Kreuzungsbereich (12) mit dem Flugkorridor (11) oder Teilen des Flugkorridors (11) mittels der einzelnen Parameter unter Berücksichtigung ornithologischer Studien oder Daten, welche eine im wesentlichen konstante Fluggeschwindigkeit und Flugrichtung in bestimmten Flughöhen der Vögel (6) zeigen, biologischer Faktoren und zusätzlicher ortsspezifischer Parameter, bestimmt wird, anhand der eine Bewertung durchgeführt und gegebenenfalls eine entsprechende Warnmeldung zur Einleitung von Gegenmaßnahmen, Minderungs- oder Vermeidungsmaßnahmen von Vogelschlag an ein übergeordnetes System und/ oder an wenigstens ein startendes oder landendes Flugzeug (13) ausgegeben wird.

**2.** Überwachungsverfahren nach Anspruch 1, **dadurch gekennzeichnet, dass** bei der Bewertung ein Gefährdungspotential bestimmt wird und/oder, dass das Gefährdungspotential in mehrere unterschiedliche Klassen eingeteilt ist, anhand derer die entsprechend auszugebende Warnmeldung bestimmt wird.

**3.** Überwachungsverfahren nach Anspruch 1 oder 2, **dadurch gekennzeichnet, dass** die Fluggeschwindigkeit des wenigstens einen Vogels (6) oder des wenigstens einen Vogelschwarms (6',6") durch eine Betrachtung über eine entsprechende Zeitspanne bestimmt wird.

**4.** Überwachungsverfahren nach einem der Ansprüche 1 bis 3, **dadurch gekennzeichnet, dass** wenigstens Teile des Flugkorridors (11) oder ein Kreuzungsbereich (12) wenigstens der Teile des Flugkorridors (11) mit bekannten Flugrouten (10) von Vögeln (6) oder Vogelschwärmen (6', 6") permanent oder nicht-permanent überwacht wird.

**5.** Überwachungsverfahren nach einem der Ansprüche 1 bis 4, **dadurch gekennzeichnet, dass** Informationen über wenigstens einen erfassten Vogel (6) und/oder wenigstens einen erfassten Vogelschwarm (6',6") über eine Schnittstelle (8) den Stereokameraeinrichtungen (1,1',1" ,1a, 1b) wenigstens einer weiteren Stereokameraeinrichtung (1,1', 1" ,1a,1b) und/oder wenigstens einem übergeordneten System, insbesondere Flugsicherungssystem (9) zur Verfügung gestellt werden.

**6.** Überwachungsverfahren nach einem der Ansprüche 1 bis 5, **dadurch gekennzeichnet, dass** die Parameter mittels Stereo-Mapping bestimmt werden.

**7.** Überwachungsverfahren nach einem der Ansprüche 1 bis 6, **dadurch gekennzeichnet, dass** wenigstens einzelne Verfahrensschritte auf einer Bildverarbeitungseinrichtung (7) einer Stereokameraeinrichtung (1,1',1" ,1a, 1b), insbesondere als Computerprogramm ausgeführt werden.

**8.** Überwachungsvorrichtung (2,2') für Flugkorridore (11) oder Teile von Flugkorridoren (11) von Flughäfen mit einer stereoskopischen Erfassung von wenigstens einem sich den Flugkorridoren (11) oder den Teilen von Flugkorridoren (11) nähernden Vogel (6) oder Vogelschwarm (6',6") mittels mehreren im Bereich der Flugkorridore (11) entlang einer bekannten Vogelflugroute (10) in einem vorab ermittelten Abstand $d_x$ von dem Kreuzungsbereich (12) des Flugkorridors (11) oder der Teile des Flugkorridors (11) mit der bekannten Vogelflugroute (10) wobei der Abstand $d_x$ etwa 0,5 km bis etwa 10 km beträgt und sich ohne Beachtung von Störgrößen, aus dem Produkt der bei vorgegebener Flughöhe maximal auftretenden Fluggeschwindigkeit $v_{vogel}$ ($V_{v1}$, $V_{v2}$)

der beobachteten Vögel (6) oder Vogelschwärme (6', 6'') und der notwendigen minimalen Vorwarnzeit $t_{min}$ ergibt, angeordneten Stereokameraeinrichtungen (1,1',1'',1a,1b), welche auf die bekannte Vogelflugroute (10) ausgerichtet sind und welche wenigstens zwei zueinander in Abstand angeordnete während der Aufnahme synchron laufende Wärmebildkameras (3a,3b) aufweisen, deren Aufnahmezeitpunkte wenigstens annähernd identisch sind und deren jeweilige Sehfelder (4a,4b) einen überlappenden Bereich (5) aufweisen, wobei die minimale Höhe des Flugkorridors mit der minimalen Höhe von Beobachtungsgebieten übereinstimmt und die maximale Höhe des Flugkorridors mit der maximalen Höhe der Beobachtunsgebiete übereinstimmt wobei die Stereokameraeinrichtungen (1', 1'', 1a, 1b) in einem

Abstand , $x = \dfrac{h}{\tan \alpha}$ von dem Beobachtungsgebiet (BG) angeordnet sind, wobei h die mittlere Höhe des Beobachtungsgebiets (BG) und $\alpha$ der vertikale Neigungswinkel zur Horizontalebene der Hauptachsen der Sehfelder (4a,4b) der Steokameraeinrichtungen (1,1',1'',1a,1b) ist wobei die äußeren vertikale Neigung $\alpha_1$ und $\alpha_2$ des Sehfeldes (4a, 4b)

mittels $\alpha_1 = \dfrac{h - f}{x + \frac{b}{2}}$ und

$\tan \alpha_2 = \dfrac{h + f}{x - \frac{b}{2}}$ berechnet werden, wobei f den jeweiligen Abstand der minimalen Höhe und der maximalen Höhe von der mittleren Höhe des Beobachtungsgebiets (B6) angibt, wobei b die Breite des Beobachtungsgebiets (BG) ist, zur Durchführung eines Überwachungsverfahrens nach einem der Ansprüche 1 bis 7.

9. Überwachungsvorrichtung nach Anspruch 8, **dadurch gekennzeichnet, dass** die wenigstens zwei Kameras (3a,3b) einer Stereokameraeinrichtung (1,1',1'' ,1a, 1b) zueinander justiert und kalibriert sind, um eine genaue stereoskopische Erfassung zu ermöglichen.

10. Überwachungsvorrichtung nach Anspruch 8 oder 9, **dadurch gekennzeichnet, dass** wenigstens eine Stereokameraeinrichtung (1,1',1'' ,1a, 1b) als Kameras Infrarotkameras bzw. Wärmebildkameras (3a, 3b) aufweist, welche im mittleren Infrarotbereich (MWIR), insbesondere von etwa 3 $\mu$m bis 5 $\mu$m oder im langwelligen Infrarotbereich, insbesondere von etwa 7 $\mu$m bis 14 $\mu$m, vorzugsweise von etwa 8 $\mu$m bis 12 $\mu$m arbeiten.

11. Überwachungsvorrichtung nach einem der Ansprüche 8 bis 10, **dadurch gekennzeichnet, dass** wenigstens eine Stereokameraeinrichtung (1,1',1'' ,1a, 1b) als Kameras Tagsichtkameras, insbesondere CCD- oder CMOS-Kameras (3a,3b) aufweist.

12. Überwachungsvorrichtung nach einem der Ansprüche 8 bis 11, **dadurch gekennzeichnet, dass** die Stereokameraeinrichtungen (1, 1',1'',1a,1b) eine Bildverarbeitungseinrichtung (7) aufweiser, welche zur Verarbeitung der mit den wenigstens zwei Kameras (3a,3b) aufgenommenen Bilddaten und/oder zur Ausführung wenigstens einzelner Verfahrensschritte eines Überwachungsverfahrens gemäß einem der Ansprüche 1 bis 7, insbesondere als Computerprogramm, vorgesehen sind.

13. Überwachungsvorrichtung nach einem der Ansprüche 8 bis 12, **dadurch gekennzeichnet, dass** die Stereokameraeinrichtungen (1,1',1'',1a,1b) wenigstens eine Schnittstelle (8), insbesondere Netzwerkschnittstelle zur kabelgebundenen oder kabellosen Kommunikation mit weiteren Stereokameraeinrichtungen (1, 1', 1'', 1a, 1b) und/oder mit wenigstens einem übergeordneten System aufweisen.

14. Überwachungsvorrichtung nach Anspruch 13, **dadurch gekennzeichnet, dass** die Schnittstelle als Funkstation (8) ausgebildet ist.

15. Überwachungsvorrichtung nach einem der Ansprüche 8 bis 14, **dadurch gekennzeichnet, dass** die Stereokameraeinrichtungen (1,1',1'',1a,1b) autonom arbeiten.

16. Überwachungsvorrichtung nach einem der Ansprüche 8 bis 15, **dadurch gekennzeichnet, dass** durch die wenigstens zwei Blickwinkel auf den durch die wenigstens zwei Kameras (3a,3b) der Stereokameraeinrichtungen (1,1',1'',1a,1b) aufgenommenen Bereich (5) absolute Raumpunkte des wenigstens einen zu erfassenden Vogels (6) und/oder des wenigstens einen zu erfassenden Vogelschwarms (6', 6'') bestimmbar sind.

17. Überwachungsvorrichtung nach einem der Ansprüche 8 bis 16, **dadurch gekennzeichnet, dass** der wenigstens eine Vogel (6) oder der wenigstens eine Vogelschwarm (6', 6'') in einer Entfernung von etwa 50 m bis etwa 3 km, insbesondere von etwa 200 m bis etwa 700 m, vorzugsweise etwa 400 m erfassbar ist, wobei die wenigstens zwei Kameras (3a,3b) eine entsprechende Brennweite aufweisen.

18. Überwachungsvorrichtung nach einem der Ansprüche 8 bis 17, **dadurch gekennzeichnet, dass** die Stereokameraeinrichtungen (1,1',1'',1a,1b) in einem vorab ermittelten Abstand $d_x$ von etwa 0, 5 km bis etwa 10 km, vorzugsweise etwa 1 km bis etwa 4 km von dem Kreuzungsbereich (12) des Flugkorridors (11) oder Teilen des Flugkorridors (11) mit bekannten Vogelflugrouten (10) oder von der Start- bzw. Landeschwelle (16) wenigstens einer Start- und Landebahn (14) angeordnet ist.

19. Überwachungsvorrichtung nach einem der Ansprüche 8 bis 18, **dadurch gekennzeichnet, dass** wenigstens zwei Stereokameraeinrichtungen (1a,1b) in einem Abstand zueinander übereinander, insbesondere in einem gemeinsamen Gehäuse (17), angeordnet sind.

20. Überwachungsvorrichtung nach Anspruch 19, **dadurch gekennzeichnet, dass** die Hauptachsen der Sehfelder (4a,4b) der wenigstens einen oben angeordneten Stereokameraeinrichtung (la) zu den Hauptachsen der Sehfelder (4a,4b) der wenigstens einen darunter angeordneten Stereokameraeinrichtung (1b) vertikal geneigt sind.

21. Überwachungsvorrichtung nach einem der Ansprüche 8 bis 20, **dadurch gekennzeichnet, dass** wenigstens eine redundante Stereokameraeinrichtung (1,1',1" ,1a, 1b) derart, insbesondere in einem Abstand von etwa 500 m, zu wenigstens einer weiteren Stereokameraeinrichtung (1,1',1", 1a, 1b) angeordnet ist, dass im laufenden Betrieb der Überwachungsvorrichtung (2,2') durch eine Berücksichtigung der Messergebnisse der wenigstens einen redundanten Stereokameraeinrichtung (1,1',1",1a, 1b) eine Erhöhung der Genauigkeit erreichbar ist.

22. Überwachungsverfahren nach einem der Ansprüche 1 bis 7 oder Überwachungsvorrichtung nach einem der Ansprüche 13 bis 21, **dadurch gekennzeichnet, dass** das übergeordnete System ein Flugsicherungssystem (9) ist.

## Claims

1. Monitoring method for flight corridors (11) or parts of flight corridors (11) of airports, with which at least one bird (6) or flock of birds (6') approaching the flight corridors (11) or the parts of flight corridors (11) are detected stereoscopically by a plurality of stereo camera devices (1, 1', 1", 1a, 1 b) which comprise thermal imaging cameras (3a, 3b) as their cameras, are aimed at a known bird flight path (10) and are arranged in the region of the flight corridors (11) along the known bird flight path (10) at a predetermines distance $d_x$ from the region of interjection (12) of the flight corridor (11) or the parts of the flight corridor (11) with the known bird flight path (10), wherein the distance $d_x$ is from about 0.5 km to about 10 km and is obtained, without considering perturbing variables, from the product of the maximum flying speed $V_{bird}$ ($V_{b1}$, $V_{b2}$) of the observed birds (6) or flocks of birds (6', 6") occurring at a predetermined flying altitude and the necessary minimum warning time $t_{min}$, wherein the minimum height of the flight corridor corresponds to the minimum height of observation zones and the maximum height of the flight corridor corresponds to the maximum height of the observation zones, wherein the stereo camera devices (1,1', 1", 1a, 1 b) are arranged at a distance $x = \dfrac{h}{\tan \alpha}$ from the observation zone (BG), h being the average height of tan $\alpha$ the observation zone (BG) and $\alpha$ being the vertical angle of indignation with respect to the horizontal plane of the principal axes of the fields of view (4a, 4b) of the stereo camera devices (1, 1', 1", 1 a, 1b), wherein the outer vertical angles of indignation $\alpha_1$ and $\alpha_2$ of the fields of view (4a, 4b) are calculated by means of $\tan \alpha_1 = \dfrac{h - f}{x + \dfrac{b}{2}}$ and

$$\tan \alpha_2 = \dfrac{h + f}{x - \dfrac{b}{2}}$$ ' f indicating the respective difference of the minimum height and the maximum height from the average height h of the observation zone (BG), b being the width of the observation zone (BG), wherein at least flying altitude, flying direction and flying speed are determined as individual parameters of the at least one bird (6) or the at least one flock of birds (6', 6") out of the group flying altitude, flying direction, flying speed, type, size or weight of the at least one bird (6), extent of the at least one flock of birds (6', 6"), number and flying distance of the birds (6) of the at least one flock of birds (6', 6"), and wherein a prediction of an arrival time and a flying altitude of a detected at least one bird (6) or of a detected at least one flock of birds (6', 6") at a region of intersection (12) with the flight corridor (11) or parts of the flight corridor (11) is determines by means of the individual parameters while taking into account ornithological studies or data which show an essentially constant flying speed and flying direction of the birds (6) at particular flying altitudes, biological factors and additional location-specific parameters, with the aid of which an evaluation is tarried out and if appropriate a corresponding warning message is output in order to initiate countermeasures, reduction or avoidance measures against bird strike, to a superordinate system and/or to at least one aircraft (13) which is staking off or landing.

2. Monitoring method according to Claim 1, **characterised in that** a hazard potential is determined in the evaluation and/or **in that** the hazard potential is subdivided into a plurality of different classes, with the aid of which the warning message is correspondingly determined.

3. Monitoring method according to Claim 1 or 2, **characterised in that** the flying speed of the at least one bird (6) or of the at least one flock of birds (6', 6") is determined by observation over an appropriate time period.

4. Monitoring method according to one of Claims 1 to 3, characterises in that at least parts of the flight corridor (11) or a region of intersection (12) of at least parts of the flight corridor (11) with known flight paths (10) of birds (6) or flocks of birds (6', 6") are monitored continuously or discontinuously.

5. Monitoring method according to one of Claims 1 to 4, characterises in that information about at least one detected bird (6) and/or at least one detected flock of birds (6', 6") is provides via an interface (8) of the stereo camera devices (1,1', 1 ", 1 a, 1b) to at least one further stereo camera device (1, 1', 1", 1a, 1b) and/or to at least one superordinate system, in particular an air traffic safety system (9).

6. Monitoring method according to one of Claims 1 to 5, characterises in that the parameters are determines by means of stereo napping.

7. Monitoring method according to one of Claims 1 to 6, characterises in that at least individual method steps are carried out on an image processing device (7) of a stereo camera device (1, 1', 1", 1a, 1b) in particular as a computer grogram.

8. Monitoring apparatus (2, 2') for flight corridors (11) or parts of flight corridors (11) of airports, comprising stereoscopic detection of at least one bird (6) or flock of birds (6', 6") approaching the flight corridors (11) or the parts of flight corridors (11) by means of a plurality of stereo camera devices (1, 1', 1", 1a, 1b) which are aimed at a known bird flight path (10), comprise at least two thermal imagine cameras (3a, 3b) arranged a distance apart and running synchronously during the rewording, the recording instants of which are at least approximately identical and the respective fields of view (4a, 4b) of which comprise an overlapping region (5), and are arranged in the region of the flight corridors (11) along the known bird flight path (10) at a predetermined distance $d_x$ from the legion of intersection (12) of the flight corridor (11) or the parts of the flight corridor (11) with the known bird flight path (10), wherein the distance

$d_x$ is from about 0.5 km to about 10 km and is obtained, without considering perturbing variables, from the product of the maximum flying speed $V_{bird}$ ($V_{b1}$, $V_{b2}$) of the observed birds (6) or flocks of birds (6', 6") occurring at a predetermined flying altitude and the necessary minimum warning time $t_{min}$, wherein the minimum height of the flight corridor corresponds to the minimum height of observation zones and the maximum height of the flight corridor corresponds to the maximum height of the observation zones, wherein the stereo camera devices (1, 1', 1", 1a, 1b) are arranged at a distance $x = \dfrac{h}{\tan \alpha}$ from the observation zone (BG), h being the average height of the observation zone (BG) and $\alpha$ being the vertical angle of inclination with respect to the horizontal plane of the principal axes of the fields of view (4a, 4b) of the stereo camera devices (1, 1', 1", 1 a, 1b), wherein the outer vertical angles of inclination $\alpha_1$ and $\alpha_2$ of the fields of view (4a, 4b) are calculated by means of $\tan \alpha_1 = \dfrac{h-f}{x+\dfrac{b}{2}}$ and

$$\tan \alpha_2 = \frac{h+f}{x-\dfrac{b}{2}},$$ f indicating the respective difference of the minimum height and the maximum height from the average height h of the observation zone (BG), b being the width of the observation zone (BG), for carrying out a monitoring method according to one of Claims 1 to 7.

9. Monitoring apparatus according to Claim 8, **characterised in that** at least two cameras (3a, 3b) of a stereo camera device (1,1', 1", 1a, 1b) are adjusted and calibrated with respect to one another in order to allow accurate stereoscopic detection.

10. Monitoring apparatus according to Claim 8 or 9, **characterised in that** at least one stereo camera device (1,1', 1", 1a, 1b) comprise infrared cameras, or thermal imaging cameras, (3a, 3b) which operate in the mid-wavelength infrared range (MWIR), in particular from about 3 $\mu$m to 5 $\mu$m, or in the long-wavelength infrared range, in particular from about 7 $\mu$m to 14 $\mu$m, preferably from about 8 $\mu$m to 12 $\mu$m.

11. Monitoring apparatus according to one of Claims 8 to 10, **characterised in that** at least one stereo camera device (1, 1', 1", 1 a, 1 b) comprised a daylight camera, in particular a CCD or CMOS camera (3a, 3b) as its camera.

**12.** Monitoring apparatus according to one of Claims 8 to 11, **characterised in that** the stereo camera devices (1, 1', 1", 1a, 1 b) comprise an image professing device (7) which are provided for processing tha image data recorded by the at least two cameras (3a, 3b) and/or for carrying out at least individual method steps of a monitoring method according to one of Claims 1 to 7, in particular as a computer program.

**13.** Monitoring apparatus according to one of Claims 8 to 12, **characterised in that** the stereo camera devices (1, 1', 1", 1a, 1b) comprise at least one interface (8), in particular a network interface for wired or wireless communication with other stereo camera devices (1, 1', 1", 1a, 1b) and/or with at least one superordinate system.

**14.** Monitoring apparatus according to Claim 13, **characterised in that** the interface is formed as a ratio station (8).

**15.** Monitoring apparatus according to one of Claims 8 to 14, **characterised in that** the stereo camera devices (1, 1', 1 ", 1 a, 1 b) operate autonomously.

**16.** Monitoring apparatus according to one of Claims 8 to 15, **characterised in that** absolute spatial points of the at least one bird (6) to be detected and/or of the at least one flock of birds (6', 6") to be detected can be determined by the at least two angles of view onto the region (5) recorded by the at least two cameras (3a, 3b) of the stereo camera devices (1, 1', 1", 1a, 1b).

**17.** Monitoring apparatus according to one of Claims 8 to 16, **characterised in that** the at least one bird (6) or the at least one flock of birds (6', 6") can be detected at a range of from about 50 m to about 3 km, in particular about 200 m to about 700 m, preferably about 400 m, the at least two cameras (3a, 3b) having a corresponding focal length.

**18.** Monitoring apparatus according to one of Claims 8 to 17, **characterised in that** the stereo camera devices (1, 1', 1", 1a, 1 b) are arranged at a predetermined distance $d_x$ of from about 0.5 km to about 10 km, preferably about 1 km to 4 km, from the region of intersection (12) of the flight corridor (11) or the parts of the flight corridor (11) with known bird flight paths (10) or from the take-off or landing threshold (16) of at least one take-off and landing runway (14).

**19.** Monitoring apparatus according to one of Claims 8 to 18, **characterised in that** at least two stereo camera devices (1a, 1b) are arranged a distance apart above one another, particularly in a common housing (17).

**20.** Monitoring apparatus according to Claim 19, **characterised in that** the principal axes of the fields of view (4a, 4b) of the at least one stereo camera device (1a) arranged above are vertically inclined with respect to the principal axes of the fields of view (4a, 4b) of the at least one stereo camera device (1b) arranged below.

**21.** Monitoring apparatus according to one of Claims 8 to 20, **characterised in that** at least one redundant stereo camera devices (1, 1', 1", 1 a, 1 b) is arranged in such a way, in particular at a distance of about 500 m, with respect to at least one other stereo camera device (1, 1', 1", 1a, 1b) so that an increase in accuracy can be achieved during running operation of the monitoring apparatus (2, 2') by taking into account measurement results of the at least one redundant stereo camera device (1, 1', 1", 1a, 1b).

**22.** Monitoring method according to one of Claims 1 to 7 or monitoring apparatus according to one of Claims 13 to 21, **characterised in that** the superordinate system is a flight safety system (9).
Claims 1 & 8: The indefinite article has been used for the first occurrence in the English where the indefinite article has been used for the first occurrence in the German [Vogelflugroute].
Claim 12: Singular subject and plural verb.
Claim 18, page 6, line 18 [of the German]: ist has been interpreted as sind.

**Revendications**

**1.** Procédé de surveillance pour couloirs aériens (11) ou parties de couloirs aériens (11) d'aéroports au moyen duquel au moines un oiseau (6) ou une nuée d'oiseaux (6') qui s'approche des couloirs aériens (11) ou des parties de couloirs aériens (11) est détecté stéréoscopiquement par plusieurs installations de caméras stéréo (1, 1', 1", 1a, 1b) disposées dans la région des couloirs aériens (11) le long d'une route de vol d'oiseaux connue (10) à une distance $d_x$ préalablement déterminée de la zone de croisement (12) entre le couloir aérien (11) ou les partiels du couloir aérien (11) et la route de vol d'oiseaux connue (10), la distance $d_x$ allant de environ 0,5 km à environ 10 km, et étant obtenue sans tenir compte de grandeurs parasites, sur la base du produit de la vitesse de vol $v_{vogel}$ ($v_{v1}$, $V_{v2}$) des oiseaux (6) ou nuées d'oiseaux (6', 6") observés qui se présente au maximum à une altitude de vol prédéterminée et du temps de préavertissement minimum nécessaire $t_{min}$, installations qui comportent comme caméras, des caméras thermiques (3a, 3b) qui sont pointées sur la route de vol d'oiseaux connue (10), l'altitude minimale du couloir aérien correspondant à l'altitude minimale de domaines d'observation et l'altitude maximale du couloir aérien correspondant à l'altitude maximale des domaines d'observation, les installations de caméras stéréo (1,1' 1", 1a, 1b) étant placées à une distance $x = \dfrac{h}{tg\,\alpha}$ où h est l'altitude moyenne du domine d'observation (BG) et a est l'angle d'inclinaison vertical sur le plan horizontal des axes principaux des champs de visée (4a, 4b) des installations de caméras stéréo (1, 1'; 1", 1 a, 1b), les autres angles d'inclinaison verticaux $\alpha_1$ et $\alpha_2$ des champs de visée (4a, 4b) étant calculés au moyen de

$$\text{tg } \alpha_1 = \frac{h-f}{x-b/2} \quad \text{et tg } \alpha_2 = \frac{h+f}{x-b/2}, \text{ où}$$

f désigne la distance entre l'altitude minimale ou l'altitude maximale et l'altitude moyenne du domaine d'observation (BG) et b est la largeur du domaine d'observation (BG), au moins l'altitude de vol, la direction de vol et la vitesse de vol étant déterminées en tant que différentes paramètres de l'au moins un oiseau (6) ou de l'au moins une nuée d'oiseaux (6', 6") sur la base du groupe altitude de vol, direction de vol, vitesse de vol, espère, taille ou poids de l'au moins un oiseau (6), étendue de l'au moins une nuée d'oiseaux (6', 6"), nombre et distance mutuelle en vol des oiseaux (6) de l'au moins une nuée d'oiseaux (6, 6'), une prévision de l'instant d'arrivée et d'une altitude de vol d'au moins un oiseau (6) détecté ou d'au moins une nuée d'oiseaux détectée (6', 6") dans une zone de croisement (12) avec le couloir aérien (11), ou avec des parties du couloir aérien (11), étant effectuée au moyen des différents paramètres en prenant en compte les études ou données ornithologiques qui indiquent une vitesse de vol et une dilection de vol sensiblement constantes à certaines altitudes de vol des oiseaux (6), des facteurs biologiques et des paramètres additionnels particuliers au lieu, prévision sur la base de laquelle une évaluation est effectués et une notification d'avertissement correspondante est éventuellement lancée en vue de la prise de contre-mesures, de mesures d'atténuation ou d'évitement des impacts d'oiseaux, à un système de rang supérieur et/ou à un avion (13) en cours de décollage ou d'atterrissage.

2. Procédé de surveillance selon la revendication 1, **caractérisé en ce que**, lors de l'évaluation, un potentiel de risque est déterminé, et/ou **en ce que** le potentiel de risque est classé dans plusieurs classes différentes sur la base lesquelles la notification d'avertissement en conséquence à lancer est déterminée.

3. Procédé de surveillance selon la revendication 1 ou 2, **caractérisé en ce que** la vitesse de vol de l'au moins un oiseau (6) ou de l'au moins une nuée d'oiseaux (6', 6") est déterminés par une observation exécutée sur une période appropriée.

4. Procédé de surveillance selon l'une des revendications 1 à 3, **caractérisé en ce qu'**au moins des parties du couloir aérien (11) ou une zone de croisement (12) entre au moins des parties du couloir aérien (11) et des routes de vol (10) d'oiseaux (6) ou de nuées d'oiseaux (6', 6") connues sont surveillées de façon permanente ou non permanente.

5. Procédé de surveillance selon l'une des revendications 1 à 4, **caractérisé en ce que** des informations relatives à au moines un oiseau (6) détecté et/ou au moins une nuée d'oiseaux (6', 6") détectée sont mises, par l'intermédiaire d'une interface (8), à la disposition des installations de caméras stéréo (1, 1', 1", 1a, 1b) d'au moins une autre installation de caméras stéréo (1, 1', 1", 1a, 1b) et/ou d'au moins un système de rang supérieur, en particulier d'un système de sécurité aérienne (9).

6. Procédé de surveillance selon l'une des revendications 1 à 5, **caractérisé en ce que** les paramètres sont déterminées au moyen d'une topographie stéréo.

7. Procédé de surveillance selon l'une des revendications 1 à 6, **caractérisé en ce qu'**au moins certains pas du procédé sont exécutés sur un dispositif de traitement d'images (7) appartenant à une instillation de caméras stéréo (1, 1', 1", 1a, 1b), en particulier sous la forme d'un programme d'ordinateur.

8. Dispositif de surveillance (2, 2') pour couloirs aériens (11) ou parties de couloirs aériens (11) d'aéroports, comportant une détection stéréoscopique d'au moins un oiseau (6) ou une nuée d'oiseaux (6', 6") qui s'approche des couloirs aériens (11) ou des parties de couloirs aériens (11), au moyen de plusieurs installons de caméras stéréo (1, 1', 1 ", 1 a, 1 b) disposées dans la légion du couloir aérien (11), le long d'une route de vol d'oiseaux connue (10), à une distance $d_x$ préalablement déterminée de la zone de croisement (12) entre le couloir aérien (11) ou des parties du couloir aérien (11) et la route de vol d'oiseaux connue (10), la distance $d_x$ allant d'environ 0,5 km à environ 10 km et étant obtenue sans tenir compte de grandeurs parasites, sur la base du produit de la vitesse de vol $v_{vogel}$ ($V_{v1}$, $V_{v2}$) des oiseaux (6) ou nuées d'oiseaux (6', 6") observés qui se présente au maximum à une altitude de vol prédéterminée et du temps de pré-alarme minimal nécessaire, instillations qui sont pointées sur la route de vol d'oiseaux connue (10) et qui comportent au moins deux caméras thermiques (3a, 3b) disposées à distance l'une de l'autre et travaillant en synchronisme pendant la prise de vue, dont les instants de prise de vue sont au moins approximativement identiques et dont les champs de visée respectifs (4a, 4b) comportent une région de chevauchement (5), l'altitude minimale du couloir aérien correspondant à l'altitude minimale de domaines d'observation et l'altitude maximale du couloir aérien correspondant à l'altitude maximale des domaines d'observation, les installations de caméras stéréo (1, 1', 1", 1a, 1b) étant disposées à une distance $x = \dfrac{h}{tg\,\alpha}$ où h est l'altitude moyenne du domaine d'observation (BG) et $\alpha$ est l'angle de d'inclinaison vertical sur le plan horizontal des axes principaux des champs de visée (4a, 4b) des installations de caméras stéréo (1, 1', 1", 1a, 1b), les autres angles d'inclinaison verticaux $a_1$ et $\alpha_2$ des champs de visée (4a, 4b) étant calculés au moyen de $tg\,\alpha = \dfrac{h-f}{x-b/2}$ et

$$tg\ \alpha_2 = \frac{h+f}{x-b/2}\,,$$ où f désigne la distance entre l'altitude minimale ou l'altitude maximale et l'altitude moyenne du domaine d'observation (BG) et b étant la largeur du domaine d'observation (BG), pour la mise en oeuvre du procédé de surveillance selon l'une des revendications 1 à 7.

9. Dispositif de surveillance selon la revendication 8, **caractérisé en ce que** les au moins deux caméras (3a, 3b) d'une instillation de caméras stéréo (1, 1', 1", 1a, 1b) sont réglées et étalonnées l'une sur l'autre pour permettre d'obtenir une acquisition stéréoscopique précise.

10. Dispositif de surveillance selon la revendication 8 ou 9, **caractérisé en ce qu'**au moins une instillation de caméras stéréo (1, 1', 1 ", 1a, 1b) comporte comme caméras des caméras infrarouges ou des caméras thermiques (3a, 3b) qui travaillent dans la gamme de l'infrarouge moyen (MWIR), en particulier de environ 3 $\mu$m à 5 $\mu$m ou dans la gamme de l'infrarouge à grandes ondes, en particulier de environ 7 $\mu$m à 14 $\mu$m, de préférence de environ 8 $\mu$m à 12 $\mu$m.

11. Dispositif de surveillance selon l'une des revendications 8 à 10, **caractérisé en ce qu'**au moins une installation de caméras stéréo (1, 1', 1", 1a, 1b) comporte, comme caméras, des caméras pour la lumière du jour, en particulier des caméras CCD ou CMOS (3a, 3b).

12. Dispositif de surveillance selon l'une des revendications 8 à 11, **caractérisé en ce que** les installons de caméras stéréo (1, 1', 1", 1a, 1b) comportent un dispositif de traitement d'image (7) qui sont prévus pour le traitement des données d'images prises avec les au moins deux caméras (3a, 3b) et/ou pour l'exécution d'au moins certains pas d'un procédé de surveillance selon l'une des revendications 1 à 7, en particulier sous la forme d'un programme d'ordinateur.

13. Dispositif de surveillance selon l'une des revendications 8 à 12, **caractérisé en ce que** les installations de caméras stéréo (1, 1', 1", 1 a, 1b) comportent au moins une interface (8), en particulier une interface réseau, pour la communication par câble ou sans câble avec d'autres installations de caméras stéréo (1, 1', 1", 1a, 1b) et/ou avec un système de rang supérieur.

14. Dispositif de surveillante selon la revendication 13, **caractérisé en ce que** l'interface est constituée par une station radio (8).

15. Dispositif de surveillance selon l'une des revendications 8 à 14, **caractérisé en ce que** les installations de caméras stéréo (1, 1', 1", 1 a, 1b) travaillent de façon autonome.

16. Dispositif de surveillante selon l'une des revendications 8 à 15, **caractérisé en ce qu'**au moyen des au moins deux angles de visée sur la région (5) filmée par les au moins deux caméras (3a, 3b) des installations de caméras stéréo (1, 1', 1", 1a, 1b), il est possible de déterminer des points absolus dans l'espace de l'au moins un oiseau (6) à détecter et/ou de l'au moins une nuée d'oiseaux (6', 6") à détecter.

17. Dispositif de surveillance selon l'une des revendications 8 à 16, **caractérisé en ce que** l'au moins un oiseau (6) ou l'au moins une nuée d'oiseaux (6', 6") peut être détectée à une distance de environ 50 m à environ 3 km, en particulier de environ 200 m à environ 700 m, de préférence d'environ 400 m, les au moins deux caméras (3a, 3b) présentant alors une focale correspondante.

18. Dispositif de surveillance selon l'une des revendications 8 à 17, **caractérisé en ce que** les installations de caméras stéréo (1, 1', 1", 1a, 1b) sont disposées à une distance $d_x$ préalablement déterminée de environ 0,5 km, à environ 10 km, de préférence de environ 1 km à environ 4 km de la région de croisement (12) entre le couloir aérien (11) ou des parties du couloir aérien (11) et de routes de vol d'oiseaux (10) connues ou du seuil de décollage ou d'atterrissage (16) d'au moins une piste de décollage et d'atterrissage (14).

**19.** Dispositif de surveillance selon l'une des revendications 8 à 18, **caractérisé en ce qu'**au moins deux installations de caméras stéréo (1a, 1 b) sont disposées l'une au-dessus de l'autre, à une certaine distance, en particulier dans un bâtiment commun (17).

**20.** Dispositif de surveillance selon la revendication 19, **caractérisé en ce que** les axes principaux de champs de visée (4a, 4b) de l'au moins une installation de caméras stéréo (1a) disposée en haut sont inclinés dans le plan vertical vers les axes principaux des champs de vissée (4a, 4b) de l'au moins une instillation de caméras stéréo (1b) disposée en dessous.

**21.** Dispositif de surveillance selon l'une des revendications 8 à 20, **caractérisé en ce qu'**au moins une installation de caméras stéréo redondante (1, 1', 1", 1a, 1b) est disposée de telle manière, en particulier à une distance d'environ 500 m d'au moins une autre installation de caméras stéréo (1, 1', 1", 1a, 1b), que, dans le fonctionnement en cours du dispositif de surveillance (2, 2'), il soit possible d'obtenir une élévation de la précision par une prise en compte des résultats de mesures de l'au moins une installation de caméras stéréo (1, 1', 1", 1a, 1b) redondante.

**22.** Procédé de surveillance selon l'une des revendications 1 à 7, ou dispositif de surveillance selon l'une des revendications 13 à 21, **caractérisé en ce que** le système de rang supérieur est un système de sécurité aérienne (9).

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005055879 A1
- DE 10032433 A1
- DE 10231299 A1
- WO 2004008403 A2
- US 20060049930 A1
- EP 1484628 A1

**In der Beschreibung aufgeführte Nicht-Patentliteratur**

- **RAOUL TOMMASI CRUDELI.** *The Vectorial 3D Bird Flight Monitoring System: A new Tool to track and manage Birds on Airports,* April 2007
- **RICHARD SNOWDEN et al.** Airport Bird Hazard Risk Assessment Process. *2007 Bird Strike Committee Proceedings, 9th Annual Meeting, Kingston,* 2007